# EUROPÄISCHE PATENTSCHRIFT

(11) **EP 3 249 085 B1**
(45) Veröffentlichungstag und Bekanntmachung des Hinweises auf die Patenterteilung: **13.10.2021**
(21) Anmeldenummer: 17169842.6
(22) Anmeldetag: 08.05.2017
(51) Int. Cl.: D01H 4/14, F16C 3/02, F16C 32/04

(54) **ROTORSCHAFT FÜR EINEN IN EINER MAGNETLAGERANORDNUNG BERÜHRUNGSLOS GELAGERTEN SPINNROTOR UND SPINNROTOR**
ROTOR SHAFT FOR A SPINNING ROTOR AND SPINNING ROTOR WITH CONTACTLESS MOUNTING IN A MAGNETIC BEARING ASSEMBLY
ARBRE DE ROTOR POUR UN ROTOR DE FILAGE MONTÉ SANS CONTACT DANS UN SYSTÈME DE PALIERS MAGNÉTIQUES ET ROTOR DE FILAGE

(30) Priorität: 24.05.2016 DE 102016109509
(43) Veröffentlichungstag der Anmeldung: 29.11.2017
(73) Patentinhaber: Rieter Ingolstadt GmbH, 85055 Ingolstadt (DE)
(72) Erfinder: LOOS, Bernd, 73326 Deggingen (DE); RIEGER, Constantin, 73072 Donzdorf (DE); Pröll, Andreas Josef, 4112 St. Gotthard (AT); Silber Dr., Siegfried, 4202 Kirchschlag (AT)
(74) Vertreter: Canzler & Bergmeier Patentanwälte Partnerschaft mbB

(56) Entgegenhaltungen:
- EP-A1- 1 156 142
- EP-A1- 2 854 258
- EP-A2- 0 972 868
- EP-A2- 2 927 521
- WO-A1-98/34324
- DE-A1- 19 642 471

## Beschreibung

Die vorliegende Erfindung betrifft einen Rotorschaft für einen in einer Magnetlageranordnung berührungslos gelagerten und durch einen elektromotorischen Einzelantrieb antreibbaren Spinnrotor einer Offenend-Spinnvorrichtung. Der Rotorschaft weist einen mehrteiligen Aufbau mit wenigstens einem Mittelstück und wenigstens zwei das Mittelstück umgebenden Außenstücken auf. Das Mittelstück und die Außenstücke sind in axialer Richtung des Rotorschafts hintereinander geordnet. Weiterhin betrifft die Erfindung einen entsprechenden Spinnrotor einer Offenend-Spinnvorrichtung.

Insbesondere aufgrund der zunehmend höheren Rotordrehzahl heutiger Offenend-Spinnmaschinen, die im Bereich von 150.000 1/min und darüber liegend, werden Spinnrotoren häufig mit ihrem Rotorschaft in einer Magnetlageranordnung abgestützt. Derartige Magnetlageranordnungen bestehen beispielsweise aus zwei voneinander beabstandeten Radialmagnetlagern, die jeweils bestrombare Spulen sowie Lagermagnete umfassen. Weiterhin sind am Rotorschaft der Spinnrotoren Permanentmagnetringe angeordnet, welche mit den Lagermagneten bzw. der Radialmagnetlagerung zusammenwirken und mit dem Rotorschaft des Spinnrotors umlaufen. Der Rotorschaft ist weiterhin mit einem Läufer eines den Rotorschaft antreibenden Einzelantriebs versehen. Ein derartiger Spinnrotor mit einer Magnetlageranordnung ist beispielsweise in der EP 0 972 868 A2 beschrieben. Der Rotorschaft weist einen mehrteiligen Aufbau auf, wobei ein Permanentmagnet für einen Stator des Motors im Inneren des Rotorschafts angeordnet ist. Die Rotortasse ist bei diesem Rotor durch eine Schraube an dem Rotorschaft befestigt. Der Wechsel der Rotortasse ist dadurch vergleichsweise aufwendig.

Auch die EP 1 966 421 B1 beschreibt einen Spinnrotor mit einer Magnetlageranordnung. Aufgrund der Anordnung von Komponenten der Magnetlageranordnung und des Antriebs an dem Rotorschaft ist die Fertigung derartiger Offenend-Spinnrotoren und deren Montage in die Offenend-Spinnvorrichtung aufwändig. Die Rotortasse ist daher auch hier lösbar mit dem Rotorschaft verbunden, um im Spinnbetrieb den einfachen Austausch des Spinnelements zu ermöglichen. Die Ausführung des Rotorschafts und des Antriebs ist in dieser Schrift nicht näher beschrieben.

Die EP 1 156 142 A1 zeigt einen Spinnrotor, der im Wesentlichen der Ausführung der EP 1 966 421 B1 entspricht, bei der die Rotortasse mittels eines Sechskants mit dem Rotorschaft verbunden ist.

Die DE 196 42 471 A1 beschreibt ebenfalls einen Spinnrotor, bei dem der Läufer des Antriebs im Inneren des Rotorschafts angeordnet ist. An seinem rückwärtigen Ende weist der Rotorschaft einen Permanentmagneten für die axiale Lagerung des Spinnrotors auf.

Eine weitere Schwierigkeit bei derartigen Magnetlageranordnungen stellt die erforderliche radiale Zentrierung und axiale Positionierung des Spinnrotors in der Magnetlageranordnung im Betrieb dar. Die DE 10 2014 104 531 A1 beschreibt hierfür eine Magnetlageranordnung mit einer aktiven radialen Magnetlagerung und einer passiven axialen Magnetlagerung. Der Rotorschaft ist dabei aus mehreren Teilen zusammengesetzt, wobei im Bereich der radialen Lagerungen magnetische Materialien eingesetzt werden und in den Bereichen außerhalb der radialen Lagerungen nicht magnetische Materialien verwendet werden. Durch die Abgrenzung des magnetischen Bereichs von den nicht magnetischen Bereichen soll der Rotorschaft im Betrieb in axialer Richtung exakt positioniert werden können. Die Ausführung des Antriebs ist in der Schrift nicht beschrieben.

Aus der WO 98/34324 A1 ist ein Rotor für einen Elektromotor bekannt, der einen mehrteiligen Aufbau mit einem Mittelstück und zwei Außenstücken beschreibt. Im Mittelstück ist ein Permanentmagnet für einen Stator des Motors angeordnet. Eines der Außenstücke bildet eine Nabe für ein Laufrad.

Auch die EP 2 854 258 A1 beschreibt einen Rotorschaft für einen elektrischen Antrieb mit einem mehrteiligen Aufbau mit einem Mittelstück und zwei Außenstücken. Die Verbindung mit einem angetriebenen Element wird in der Schrift nicht thematisiert.

Aufgabe der vorliegenden Erfindung ist es, einen Rotorschaft vorzuschlagen, welcher einfach herstellbar ist und in einfacher Weise in die Offenend-Spinnvorrichtung montierbar ist. Weiterhin soll ein entsprechender Spinnrotor vorgeschlagen werden.

Die Aufgabe wird gelöst mit den Merkmalen des unabhängigen Anspruchs. Ein Rotorschaft für einen in einer Magnetlageranordnung berührungslos gelagerten und durch einen elektromotorischen Einzelantrieb antreibbaren Spinnrotor einer Offenend-Spinnvorrichtung weist einen mehrteiligen Aufbau auf. Der Rotorschaft beinhaltet wenigstens ein Mittelstück und wenigstens zwei das Mittelstück umgebende Außenstücke, wobei das Mittelstück und die Außenstücke in axialer Richtung des Rotorschafts hintereinander angeordnet sind.

Das Mittelstück weist einen Hohlraum auf, in welchem ein mit einem Stator des elektromotorischen Einzelantrieb zusammenwirkender Permanentmagnet angeordnet ist. Dadurch, dass der Permanentmagnet des elektromotorischen Einzelantriebs in dem Hohlraum des Mittelstücks angeordnet wird, kann dieser direkt bei der Montage des Rotorschafts eingesetzt werden, so dass kein zusätzlicher Montageschritt für den Permanentmagneten erforderlich ist. Durch die innen liegende Anordnung des Permanentmagneten in dem Hohlraum sind weiterhin keine außen an dem Rotorschaft hervorstehenden Teile vorhanden, so dass die Montage des Rotorschafts in die Offenend-Spinnvorrichtung erleichtert wird. Die mehrteilige Ausführung des Rotorschafts ermöglicht es dabei in vorteilhafter Weise, jede der Komponenten des Rotorschafts entsprechend seiner Funktion auszubilden und dafür ein jeweils passendes Material einzusetzen.

Die Montage des Rotorschafts ist zudem besonders einfach, wenn der Permanentmagnet durch eines der Außenstücke in dem Mittelstück in axialer Richtung positioniert ist. Es ist somit lediglich erforderlich, den Permanentmagneten in dem Hohlraum einzusetzen. Nach Montage des entsprechenden Außenstücks ist dann der Permanentmagnet korrekt in Bezug auf das Mittelstück und damit auch korrekt in Bezug auf den Stator der Offenend-Spinnvorrichtung positioniert.

Dabei weist der Rotorschaft ein zusätzliches Verbindungsstück zur Verbindung des Rotorschafts mit einer Rotortasse auf. Das Verbindungsstück kann dadurch, dass es lediglich der Verbindung des Rotorschafts und der Rotortasse dienen muss, einen konstruktiv einfachen Aufbau aufweisen und dadurch auch in einfacher Weise hergestellt werden. Die Herstellung eines komplex geformten Bauteils, wie es bei einem einteiligen Rotorschaft erforderlich ist, ist hierdurch nicht erforderlich. Zudem können auch die Außenstücke einen einfacheren Aufbau aufweisen, wenn diese die Funktion der Verbindung zur Rotortasse nicht beinhalten müssen.

Nach der Erfindung ist das Verbindungsstück rohrförmig ausgeführt und weist einen ersten Verbindungsbereich auf, mit welchem es mit einem ersten Außenstück verbunden ist, sowie einen zweiten Verbindungsbereich zur Verbindung mit der Rotortasse. Das Verbindungsstück kann hierdurch besonders kostengünstig hergestellt werden. Zugleich ist die Montage des Verbindungsstücks bzw. des Rotorschafts dadurch erleichtert, dass das rohrförmige Verbindungsstück lediglich auf eines der Außenstücke des Rotorschafts aufgeschoben werden muss.

In Bezug auf die Herstellung des Rotorschaft des bzw. der einzelnen Bauteile des Rotorschafts ist es weiterhin vorteilhaft, wenn das erste Außenstück eine drehmomentübertragende Kupplungsvorrichtung, insbesondere eine Verzahnung, zur drehmomentübertragenden Verbindung des Rotorschafts mit der Rotortasse aufweist. Da das erste Außenstück lediglich die Funktion der Drehmomentübertragung zur Rotortasse realisieren muss, aber nicht der stabilen Verbindung von Rotortasse und Rotorschaft dient, kann es einen einfacheren Aufbau aufweisen und hierdurch wiederum in günstiger Weise hergestellt werden.

Ebenfalls vorteilhaft ist es, wenn der Rotorschaft ein zweites Außenstück beinhaltet, das an seinem der Kupplungsvorrichtung abgewandten, stirnseitigen Ende eine Aufnahme, insbesondere eine zylindrische Ausnehmung, für einen Permanentmagneten aufweist. Ein Permanentmagnet für eine axiale Magnetlagerung kann hierdurch in einfacher Weise in den Rotorschaft integriert werden.

Besonders vorteilhaft ist es dabei, wenn in der Ausnehmung eine Einsatzbuchse aus einem nicht magnetisierbaren Material, insbesondere aus einem Aluminiummaterial, angeordnet ist, welche den Permanentmagneten aufnimmt. Durch die Einsatzbuchse kann sichergestellt werden, dass lediglich der eingesetzte Permanentmagnet mit dem Axiallager in Wechselwirkung steht und hierdurch der Abstand zwischen dem Axiallager und dem Ende des Rotorschafts stets weit gehend konstant bleibt.

Nach einer weiteren Ausführung der Erfindung ist es vorteilhaft, wenn zumindest die Außenstücke und das Mittelstück miteinander verschweißt, insbesondere laserverschweißt, sind. Die einzelnen Komponenten des Rotorschafts können hierdurch mit einer besonders hohen Genauigkeit verbunden werden, wobei die Gefahr eines Verzugs vergleichsweise gering ist. Andere Verbindungen der Außenstücke mit dem Mittelstück wie beispielsweise Verkleben sind jedoch ebenfalls denkbar.

Nach einer besonders vorteilhaften Ausführung der Erfindung sind der erste und der zweite Verbindungsbereich hülsenförmig ausgeführt. Das Verbindungsstück kann hierdurch besonders kostengünstig hergestellt werden. Zugleich ist die Montage des Verbindungsstücks bzw. des Rotorschafts dadurch erleichtert, dass das rohrförmige Verbindungsstück lediglich auf eines der Außenstücke des Rotorschafts aufgeschoben werden muss.

Ist das Verbindungsstück rohrförmig ausgeführt, so ist es weiterhin besonders vorteilhaft, wenn die Kupplungsvorrichtung zumindest radial innerhalb des zweiten hülsenförmigen Verbindungsbereichs angeordnet ist. Die Kupplungsvorrichtung kann hierdurch geschützt vor Faserflug und sonstigen Verschmutzungen sowie auch vor mechanischen Beschädigungen angeordnet werden. Grundsätzlich ist es jedoch ebenso denkbar, die Kupplungsvorrichtung radial außerhalb des hülsenförmigen Verbindungsbereichs anzuordnen.

Nach einer anderen Weiterbildung des Rotorschafts ist es vorteilhaft, wenn das Verbindungsstück oder eines der Außenstücke eine in axialer Richtung weisende Lagerfläche eines Notlauflagers, insbesondere einen Lagerring, aufweist. Bei einem Versagen des Axiallagers läuft dann die Lagerfläche gegen eine komplementär ausgebildete Lagerfläche an der Offenend-Spinnvorrichtung, welche einen günstigen Reibungspartner für die Lagerfläche an dem Rotorschaft bildet.

Besonders vorteilhaft ist es, wenn der Lagerring auf das Verbindungsstück oder eines der Außenstücke aufgeschrumpft ist, da hierbei auch ein Austausch des Lagerrings bei Verschleiß möglich ist.

Besonders vorteilhaft ist es weiterhin, wenn die Lagerfläche, insbesondere der Lagerring, aus einem metallischen Material, insbesondere einem Aluminiummaterial, gefertigt ist. Denkbar ist es aber auch, die Lagerfläche aus einem Kunststoffmaterial oder einem Compositematerial herzustellen.

Ist das wenigstens eine Mittelstück des Rotorschafts aus einem nicht magnetisierbaren Material, insbesondere einem Edelstahlmaterial, gefertigt, so ist das ungestörte Zusammenwirken des innen liegenden Permanentmagneten mit dem Stator des Einzelantriebs möglich. Auch hier liegt es aber im Rahmen der Erfindung, ein Kunststoff- oder Compositematerial einzusetzen. Weiterhin ist es denkbar, das Mittelstück aus einem 3-D-druckbaren Material herzustellen, das ggf. nach der Herstellung noch spanend bearbeitet wird.

Vorteilhafterweise sind dabei die wenigstens zwei Außenstücke und/oder das Verbindungsstück aus einem magnetisierbaren Material, insbesondere aus einem hochfesten oder einem nichtrostenden Stahlmaterial, gefertigt. Unter einem hochfesten Stahlmaterial wird dabei ein Material mit einer Mindeststreckgrenze von 355 N/mm² verstanden. Dieses weist eine hohe Festigkeit auf und verleiht dem Rotorschaft dadurch die für einen Betrieb mit Drehzahlen von über 150.000 1/min erforderliche Stabilität. Zugleich ermöglicht das magnetisierbare Material der Außenstücke das Zusammenwirken mit den Radialmagnetlagern.

Durch die Ausführung des Mittelstücks aus einem nicht magnetisierbaren Material und die Ausführung der wenigstens zwei Außenstücke aus einem magnetisierbaren Material kann weiterhin die korrekte axiale Positionierung des Spinnrotors in der Magnetlageranordnung sichergestellt werden.

Vorteilhaft ist es weiterhin, wenn das Mittelstück einen ersten Aufnahmebereich für das erste Außenstück und einen zweiten Aufnahmebereich für das zweite Außenstück aufweist. Das Zusammenfügen der Außenstücke und des Mittelstücks zu dem Rotorschaft ist hierdurch erleichtert. Vorzugsweise sind dabei die Aufnahmebereiche entweder hülsenförmig oder als zylindrischer Absatz aufgebaut, so dass die Außenstücke einfach auf das Mittelstück aufgesteckt oder in dieses eingesteckt werden können.

Daneben ist es vorteilhaft, wenn das Mittelstück und die Außenstücke den gleichen Außendurchmesser aufweisen. Der Rotorschaft kann hierdurch problemlos in die Offenend-Spinnvorrichtung eingesetzt werden bzw. aus dieser entnommen werden.

Aufgrund der beschriebenen Vorteile des Rotorschafts ist es weiterhin vorteilhaft, wenn ein Spinnrotor einer Offenend-Spinnvorrichtung einen derartigen Rotorschaft aufweist.

Weitere Vorteile der Erfindung werden anhand der nachfolgend dargestellten Ausführungsbeispiele beschrieben. Es zeigen:
- **Figur 1**: eine schematische Schnittdarstellung einer Offenend-Spinnvorrichtung,
- **Figur 2**: eine schematische Schnittdarstellung eines Rotorschafts eines Offenend-Spinnrotors,
- **Figur 3**: eine schematische Schnittdarstellung eines Rotorschafts in einer alternativen Ausführung, sowie
- **Figur 4**: eine perspektivische Darstellung einer Rotortasse.

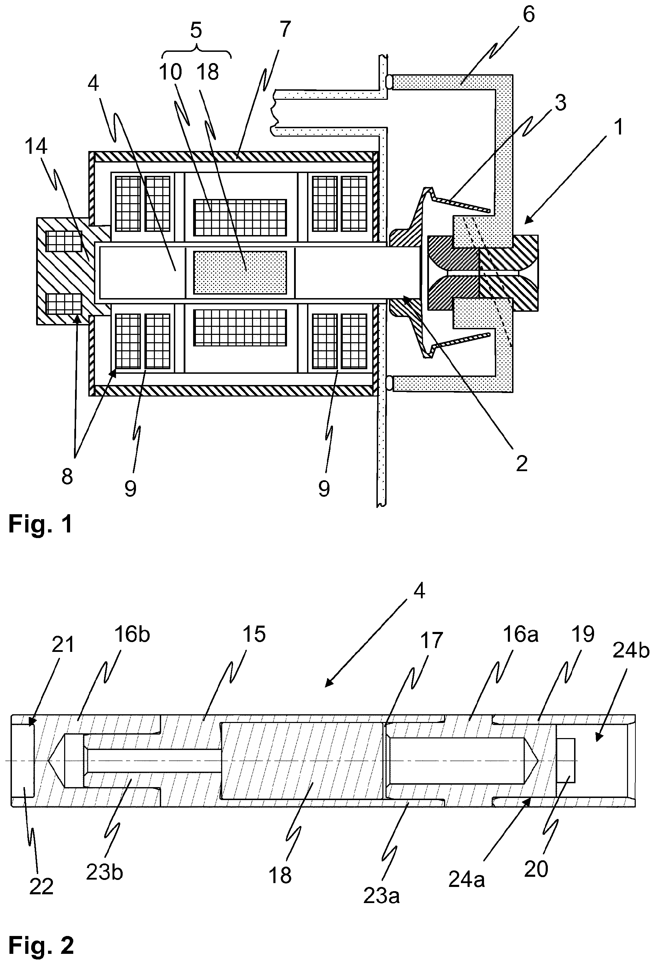

Figur 1 zeigt eine schematische Schnittdarstellung einer Offenend-Spinnvorrichtung 1. Die Offenend-Spinnvorrichtung 1 beinhaltet einen Spinnrotor 2, welche durch einen Einzelantrieb 5 antreibbar ist und in einer Magnetlageranordnung 8 drehbar gelagert ist. Der Spinnrotor 2 ist dabei derart in der Offenend-Spinnvorrichtung 1 angeordnet, dass seine Rotortasse 3 in einem mit unterdruckbeaufschlagten Rotorgehäuse 6 umläuft, während der Rotorschaft 4 des Spinnrotors 2 sich von dem Rotorgehäuses 6 bis in ein Antriebsgehäuse 7 erstreckt. In dem Antriebsgehäuse 7 sind sowohl der Einzelantrieb 5 als auch die Magnetlageranordnung 8 angeordnet. Die Magnetlageranordnung 8 beinhaltet vorliegend sowohl zwei beabstandet zueinander angeordnete Radialmagnetlager 9, welche vorliegend als aktive Magnetlager ausgebildet sind, sowie ein ebenfalls als aktives Magnetlager ausgeführtes Axiallager 14. Es ist jedoch nicht unbedingt erforderlich, auch das Axiallager 14 als Magnetlager auszubilden. Dieses könnte ebenso als Luftlager oder auch als Spurlager ausgebildet sein.

Der Einzelantrieb 5 beinhaltet einen Stator 10 mit Statorwicklungen und ist vorliegend zwischen den beiden Radialmagnetlagern 9 angeordnet. Weiterhin beinhaltet der Einzelantrieb 5 einen Permanentmagneten 18, welcher mit dem Rotorschaft 4 des Spinnrotors 2 verbunden ist, so dass der Rotorschaft 4 den Läufer des Einzelantriebs 5 bildet. Der Rotorschaft 4 des Spinnrotors 2 weist dabei einen mehrteiligen Aufbau auf, welcher im Folgenden anhand der Figur 2 erläutert wird.

Der Rotorschaft 4 ist in Figur 2 in einer schematischen Schnittdarstellung gezeigt. Er beinhaltet nach der vorliegenden Darstellung wenigstens ein Mittelstück 15 sowie wenigstens zwei Außenstücke 16, welche in axialer Richtung hintereinander angeordnet sind. Das Mittelstück 15 ist aus einem nicht magnetisierbaren Material gefertigt und weist einen Hohlraum 17 auf, in welchem der Permanentmagnet 18 des Einzelantriebs 5 angeordnet ist. Im Gegensatz zu dem Mittelstück 15 sind die beiden Außenstücke 16 aus einem magnetisierbaren Material hergestellt, so dass diese mit den Radialmagnetlager 9 der Offenend-Spinnvorrichtung 1 zusammenwirken können. Aufgrund dessen, dass die Außenstücke 16 aus einem magnetisierbaren Material bestehen, ist es nicht erforderlich, Permanentmagnetringe auf dem Rotorschaft 4 anzuordnen. Dennoch ist es aufgrund der mehrteiligen Ausführung des Rotorschafts 4 möglich, den Permanentmagneten 18 für den Einzelantrieb 5 platzgünstig und montagefreundlich im Inneren des Rotorschafts 4 anzuordnen, da das Mittelstück aus einem nicht magnetisierbaren Material besteht und somit das Zusammenwirken des Permanentmagneten 18 mit dem Stator 10 nicht beeinträchtigt.

Besonders vorteilhaft ist es dabei, wenn der Rotorschaft 4 nur ein Mittelstück 15 sowie nur zwei Außenstücke 16 umfasst und allenfalls noch ein Verbindungsstück 19 zur Verbindung mit der Rotortasse 3 vorgesehen ist. Es kann dabei einerseits jedes der Außenstücke 16 bzw. das Mittelstück 15 entsprechend seiner Funktion hergestellt werden, wobei dennoch die Montage des Rotorschafts 4 aus nur drei oder vier Komponenten einfach durchzuführen ist.

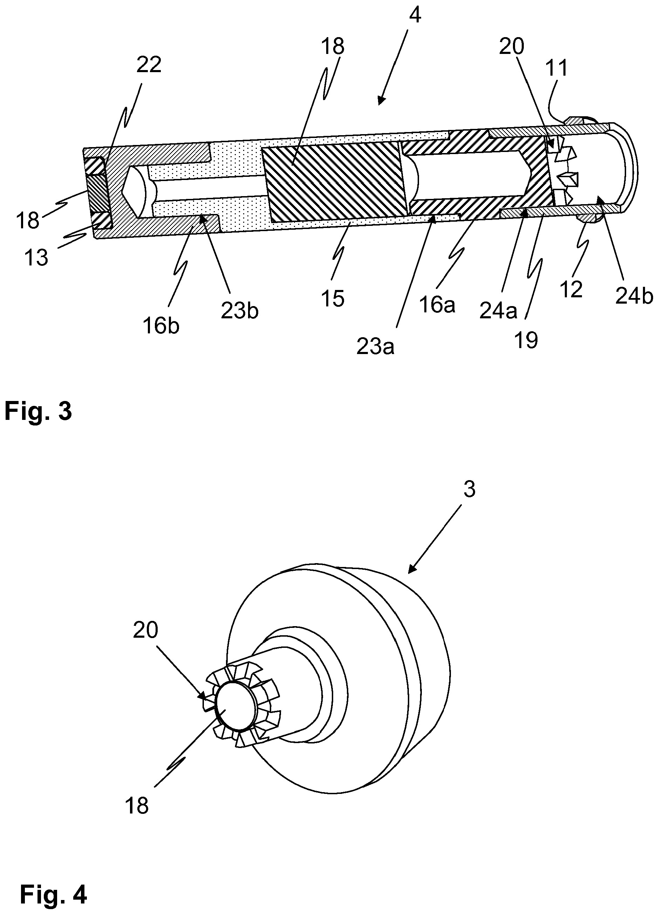

Wie der Figur 2 weiterhin entnehmbar, weist der Rotorschaft 4 ein erstes Außenstück 16a auf, das eine Kupplungsvorrichtung 20 zur drehmomentübertragenden Verbindung mit der Rotortasse 3 (s. Figur 4) herstellt. Die Kupplungsvorrichtung 20 ist vorliegend lediglich schematisch gezeigt. Der Permanentmagnet 18 ist durch die Montage des Außenstücks 16a zugleich in Bezug auf den Rotorschaft 4 und damit in Bezug auf die Offenend-Spinnvorrichtung 1 positioniert. Weiterhin weist der Rotorschaft 4 ein zweites Außenstück 16b auf, das nach vorliegender Darstellung eine Aufnahme 21 für einen Permanentmagneten 18 (hier nicht dargestellt) beinhaltet. Dieser kann mit einem magnetischen Axiallager 14 (s. Figur 1) zusammenwirken. Eine derartige Aufnahme 21 kommt jedoch lediglich dann zum Einsatz, wenn das Axiallager 14 als Magnetlager ausgebildet ist. Die Aufnahme 21 ist vorzugsweise als zylindrische Ausnehmung 22 ausgebildet.

Zur Verbindung des Mittelstücks 15 mit dem ersten Außenstück 16a weist das Mittelstück 15 einen ersten Aufnahmebereich 23a auf, welcher vorliegend hülsenförmig ausgeführt ist, so dass das erste Außenstück 16a lediglich in diesen eingesteckt werden muss. Das erste Außenstück 16a weist hierzu wiederum einen zu dem hülsenförmigen ersten Aufnahmebereich 23a komplementär ausgebildeten Bereich auf. Zur Verbindung mit dem zweiten Außenstück 16b, welches dem Axiallager 14 zugewandt ist, weist das Mittelstück 15 einen zweiten Aufnahmebereich 23b auf. Dieser ist vorliegend als zylinderförmiger Absatz ausgebildet, so dass das zweite Außenstück 16b lediglich mit einem komplementär zu dem zweiten Aufnahmebereich 23b ausgebildeten Bereich aufgesteckt werden muss. Es liegt auf der Hand, dass die Ausführung des ersten und zweiten Aufnahmebereichs 23a, 23b lediglich beispielhaft zu verstehen ist. Ebenso wäre es denkbar, beide Aufnahmebereiche 23a, 23b hülsenförmig oder auch beide Aufnahmebereiche 23a, 23b als zylindrische Absätze auszuführen. Schließlich müssen die Aufnahmebereiche 23a, 23b auch nicht unbedingt zylindrisch sein, sondern könnten auch eine andere Geometrie aufweisen. Eine zylindrische Geometrie der Aufnahmebereiche 23a, 23b ermöglicht jedoch eine einfache Montage. Die Außenstücke 16a, 16b und das Mittelstück 15 sind vorzugsweise durch Laserschweißen miteinander verbunden, so dass der Rotorschaft 4 eine hohe Genauigkeit und einen guten Rundlauf aufweist.

Nach der vorliegenden Darstellung weist der Rotorschaft 4 weiterhin noch ein Verbindungsstück 19 auf, welches der Verbindung mit der hier nicht dargestellten Rotortasse 3 dient. Das Versehen eines zusätzlichen Verbindungsstücks 19 ermöglicht es dabei in besonders vorteilhafter Weise, das Außenstück 16a zu bearbeiten und die drehmomentübertragende Kupplungsvorrichtung 20 einzubringen, wie insbesondere auch aus Figur 3 ersichtlich. Abweichend von der gezeigten Darstellung ist es jedoch nicht unbedingt erforderlich, die drehmomentübertragende Kupplungsvorrichtung 20 an einem der Außenstücke 16 vorzusehen. Diese könnte ebenfalls an dem Verbindungsstück 19 angebracht sein.

Figur 3 zeigt eine weitere Ausführung eines Rotorschafts 4 mit einer Kupplungsvorrichtung 20. Der Rotorschaft 4 der Figur 3 entspricht in seinem Aufbau im Wesentlichen dem der Figur 2, so dass im Folgenden nur noch auf die Unterschiede zu dem der Figur 2 näher eingegangen wird. Wie der Figur 3 entnehmbar, ist auch hier wiederum der Permanentmagnet 18 in einem zylindrischen Hohlraum 17 angeordnet und wird dort durch das Außenstück 16a, welches die drehmomentübertragende Kupplungsvorrichtung 20 für die Rotortasse aufweist, in axialer Richtung positioniert. Die Kupplungsvorrichtung 20 ist vorliegend in Form einer Verzahnung ausgebildet. Das Einbringen der Verzahnung in das stirnseitige Ende des Außenstücks 16a ist dabei in besonders günstige Weise möglich, da das stirnseitige Ende vor Montage des Verbindungsstücks 19 frei zugänglich ist.

Nach einer alternativen, hier nicht dargestellten Ausführung ist es jedoch auch möglich, die Kupplungsvorrichtung 20 in Form eines separaten Kupplungsstücks vorzusehen, das in eine Bohrung des Außenstücks 16a oder ggf. auch in den ersten Verbindungsbereich 24a des Verbindungsstücks 19 eingesetzt, insbesondere eingepresst oder eingeklebt, ist. Dabei wäre es auch denkbar, das separate Kupplungsstück als einen entsprechend geformten Permanentmagneten 18 auszubilden, welcher dann die Rotortasse 3 in axialer Richtung an dem Rotorschaft fixiert.

Wie der Figur 3 weiterhin entnehmbar, ist vorliegend in der Aufnahme 21 ein Permanentmagnet 18 innerhalb einer Einsatzbuchse 13 aus einem nicht magnetisierbaren Material wie beispielsweise Aluminium angeordnet, welche die Einhaltung eines vorgegebenen axialen Spalts in dem Axiallager 14 gewährleistet.

Das Verbindungsstück 19 ist ebenso wie das der Figur 2 hülsenförmig bzw. rohrförmig ausgebildet und kann hierdurch in besonders einfacher Weise hergestellt und montiert werden. Zur Montage auf den Rotorschaft 4 bzw. das erste Außenstück 16a weist das Verbindungsstück 19 einen ersten Verbindungsbereich 24a auf, der hülsenförmig ausgebildet ist und somit lediglich über einen komplementär dazu ausgebildeten zylindrischen Absatz des ersten Außenstücks 16a geschoben werden muss. Die Verbindung des Verbindungsstücks 19 mit dem ersten Außenstück 16a erfolgt vorzugsweise wiederum durch Laserschweißen.

Das Verbindungsstück 19 weist weiterhin einen zweiten, hülsenförmigen Verbindungsbereich 24b auf, welcher der Verbindung mit der Rotortasse 3 (s. Figur 4) dient. Die Rotortasse 3 kann somit einfach in den Verbindungsbereich 24b eingesteckt werden. Dabei ist das Verbinden der Rotortasse 3 mit dem Rotorschaft 4 erleichtert, da die Rotortasse 3 in dem hülsenförmigen Verbindungsbereich 24b geführt wird und somit das Zusammenfügen der Kupplungsvorrichtung 20 erleichtert wird.

Die rohrförmige Ausführung des Verbindungsstücks 19 ermöglicht weiterhin in vorteilhafter Weise die geschützte Anordnung der Kupplungsvorrichtung 20 radial und axial innerhalb des Verbindungsstücks 19. Ein derartiges Verbindungsstück 19 zur Verbindung mit der Rotortasse 3 ist jedoch nicht unbedingt erforderlich. Die Kupplungsvorrichtung 20 könnte auch derart ausgebildet sein, dass sie nicht nur der Drehmomentübertragung, sondern zugleich auch der Verbindung mit der Rotortasse 3 dient. Schließlich wäre es auch denkbar, das Verbindungsstück 19 nicht am Rotorschaft 4, sondern an der Rotortasse 3 anzuordnen.

Der vorliegende Rotorschaft 4 weist weiterhin noch einen Lagerring 12 auf, welcher eine Lagerfläche 11 eines axialen Notlauflagers beinhaltet. Diese Lagerfläche 11 ist ringförmig ausgebildet, weist in axialer Richtung und wirkt mit einer entsprechend ausgebildeten Lagerfläche der Offenend-Spinnvorrichtung 1, welche hier nicht dargestellt ist, zusammen. Alternativ zu dem gezeigten Lagerring 12 wäre es jedoch auch denkbar, eine Lagerfläche 11 eines axialen Notlauflagers im Bereich des stirnseitigen Endes des Rotorschafts 4 vorzusehen.

Figur 4 zeigt eine Rotortasse 3, welche eine komplementär zu der Kupplungsvorrichtung 20 des Rotorschafts 4 ausgebildete Kupplungsvorrichtung 20 in Form einer Verzahnung trägt. Weiterhin ist an der Rotortasse 3 ein Permanentmagnet 18 angeordnet, welcher die lediglich in den Verbindungsbereich 24b des Rotorschafts 4 eingesteckte Rotortasse 3 in axialer Richtung am Rotorschaft 4 hält. Selbstverständlich wäre es abweichend von der gezeigten Darstellung auch möglich, den Permanentmagneten 18 zur axialen Sicherung der Rotortasse 3 in dem Rotorschaft 4 im Bereich der Kupplungsvorrichtung 20 bzw. im Bereich des Außenstücks 16a anzuordnen.

Der vorliegende Rotorschaft 4 weist dabei den Vorteil auf, dass aufgrund der magnetischen Außenstücke 16 es möglich ist, auf zusätzliche Permanentmagnetringe an dem Rotorschaft 4 zu verzichten. Dennoch ist es aufgrund der mehrteiligen Ausführung mit dem nicht magnetischen Mittelstück 15 möglich, den Permanentmagneten 18 im Inneren des Rotorschafts 4 anzuordnen. Der Rotorschaft 4 weist hierdurch eine glatte Außenumfangsfläche mit konstantem Durchmesser auf, was seine Montage in die Offenend-Spinnvorrichtung 1 erleichtert. Da der vorliegende Rotorschaft 4 aus lediglich drei bzw. mit dem Verbindungsstück 19 vier Komponenten aufweist, kann dieser trotz der mehrteiligen Ausführung in einfacher Weise zusammengefügt werden.

Die Erfindung ist nicht auf die dargestellten Ausführungsbeispiele beschränkt. Beispielsweise könnte jedes der Mittelstücke 15 und Außenstücke 16 auch zweiteilig ausgeführt sein oder es könnte mehr als zwei Außenstücke 16 vorgesehen sein, auch wenn die insgesamt nur dreiteilige Ausführung, gegebenenfalls mit zusätzlichem Verbindungsstück 19, besonders vorteilhaft ist. Weitere Abwandlungen und Kombinationen im Rahmen der Patentansprüche fallen ebenfalls unter die Erfindung.

### Bezugszeichenliste

- 1: Offenend-Spinnvorrichtung
- 2: Spinnrotor
- 3: Rotortasse
- 4: Rotorschaft
- 5: Einzelantrieb
- 6: Rotorgehäuse
- 7: Antriebsgehäuse
- 8: Magnetlageranordnung
- 9: Radialmagnetlager
- 10: Stator
- 11: Lagerfläche
- 12: Lagerring
- 13: Einsatzbuchse
- 14: Axiallager
- 15: Mittelstück
- 16: Außenstück
16a erstes Außenstück
16b zweites Außenstück
- 17: Hohlraum
- 18: Permanentmagnet
- 19: Verbindungsstück
- 20: Kupplungsvorrichtung
- 21: Aufnahme
- 22: zylindrische Ausnehmung
- 23: Aufnahmebereich 23a erster Aufnahmebereich 23b zweiter Aufnahmebereich
- 24: Verbindungsbereich
24a erster Verbindungsbereich
24b zweiter Verbindungsbereich

## Patentansprüche

1. Rotorschaft (4) für einen in einer Magnetlageranordnung (8) berührungslos gelagerten und durch einen elektromotorischen Einzelantrieb (5) antreibbaren Spinnrotor (2) einer Offenend-Spinnvorrichtung (1), wobei der Rotorschaft (4) einen mehrteiligen Aufbau mit wenigstens einem Mittelstück (15) und wenigstens zwei das Mittelstück (15) umgebenden Außenstücken (16) aufweist, wobei das Mittelstück (15) und die Außenstücke (16) in axialer Richtung des Rotorschafts (4) hintereinander angeordnet sind und wobei das Mittelstück (15) einen Hohlraum (17) aufweist, in welchem ein mit einem Stator (10) des elektromotorischen Einzelantriebs (5) zusammenwirkender Permanentmagnet (18) angeordnet ist, **dadurch gekennzeichnet, dass** der Rotorschaft (4) ein zusätzliches Verbindungsstück (19) zur Verbindung des Rotorschafts (4) mit einer Rotortasse (3) aufweist, wobei das Verbindungsstück (19) rohrförmig ausgeführt ist und einen ersten Verbindungsbereich (24a), mit welchem es mit einem ersten Außenstück (16a) der wenigstens zwei Außenstücke (16) verbunden ist, und einen zweiten Verbindungsbereich (24b) zur Verbindung mit der Rotortasse (3) aufweist.

2. Rotorschaft (4) nach dem vorhergehenden Anspruch, **dadurch gekennzeichnet, dass** das erste Außenstück (16a) eine drehmomentübertragende Kupplungsvorrichtung (20), insbesondere eine Verzahnung, zur drehmomentübertragenden Verbindung des Rotorschafts (4) mit der Rotortasse (3) aufweist.

3. Rotorschaft (4) nach dem vorhergehenden Anspruch, **dadurch gekennzeichnet, dass** der Rotorschaft (4) ein zweites Außenstück (16b) der wenigstens zwei Außenstücke (16) beinhaltet, das an seinem der Kupplungsvorrichtung (20) abgewandten, stirnseitigen Ende eine Aufnahme (21), insbesondere eine zylindrische Ausnehmung (22), für einen Permanentmagneten (18) aufweist.

4. Rotorschaft (4) nach dem vorhergehenden Anspruch, **dadurch gekennzeichnet, dass** in der Ausnehmung (22) eine Einsatzbuchse (13) aus einem nicht magnetisierbaren Material, insbesondere aus einem Aluminiummaterial, angeordnet ist, welche den Permanentmagneten (18) aufnimmt.

5. Rotorschaft (4) nach einem der vorhergehenden Ansprüche, **dadurch gekennzeichnet, dass** zumindest die Außenstücke (16) und das Mittelstück (15) miteinander verschweißt, insbesondere laserverschweißt, sind.

6. Rotorschaft (4) nach einem der vorhergehenden Ansprüche, **dadurch gekennzeichnet, dass** der erste Verbindungsbereich (24a) und der zweite Verbindungsbereich (24b) hülsenförmig sind.

7. Rotorschaft (4) nach einem der Ansprüche 2 - 6, **dadurch gekennzeichnet, dass** die Kupplungsvorrichtung (20) zumindest radial, vorzugsweise radial und axial, innerhalb des zweiten hülsenförmigen Verbindungsbereichs (24b) angeordnet ist.

8. Rotorschaft (4) nach einem der vorhergehenden Ansprüche, **dadurch gekennzeichnet, dass** das Verbindungsstück (19) oder eines der Außenstücke (16) eine in axialer Richtung weisende Lagerfläche (11) eines Notlauflagers, insbesondere einen Lagerring (12), aufweist.

9. Rotorschaft (4) nach dem vorhergehenden Anspruch, **dadurch gekennzeichnet, dass** die Lagerfläche (11), insbesondere der Lagerring (12), aus einem metallischen Material, insbesondere einem Aluminiummaterial, gefertigt ist.

10. Rotorschaft (4) nach einem der vorhergehenden Ansprüche, **dadurch gekennzeichnet, dass** das wenigstens eine Mittelstück (15) des Rotorschafts (4) aus einem nicht magnetisierbaren Material, insbesondere einem Edelstahlmaterial, gefertigt ist.

11. Rotorschaft (4) nach einem der vorhergehenden Ansprüche, **dadurch gekennzeichnet, dass** die wenigstens zwei Außenstücke (16) und/oder das Verbindungsstück (19) aus einem magnetisierbaren Material, insbesondere einem hochfesten oder einem nichtrostenden Stahlmaterial, gefertigt sind.

12. Rotorschaft (4) nach einem der vorhergehenden Ansprüche 3 bis 11, **dadurch gekennzeichnet, dass** das Mittelstück (15) einen ersten Aufnahmebereich (23a) für das erste Außenstück (16a) und einen zweiten Aufnahmebereich (23b) für das zweite Außenstück (16b) aufweist.

13. Rotorschaft (4) nach einem der vorhergehenden Ansprüche, **dadurch gekennzeichnet, dass** das Mittelstück (15) und die Außenstücke (16) den gleichen Außendurchmesser aufweisen.

14. Spinnrotor (2) mit einer Rotortasse (3) und einem Rotorschaft (4) nach einem der vorhergehenden Ansprüche.

## Claims

1. A rotor shaft (4) for a spinning rotor (2) of an open-end spinning device (1), supported in a magnetic bearing arrangement (8) in a non-contacting manner and driven by means of a single electric motor drive (5), the rotor shaft (4) comprising a multipart structure having at least one center piece (15) and at least two outer pieces (16) enclosing the center piece (15), the center piece (15) and the outer pieces (16) being disposed one after the other in the axial direction of the rotor shaft (4), and the center piece (15) comprising a cavity (17) in which a permanent magnet (18) interacting with a stator (10) of the single electric motor drive (5) is disposed, **characterized in that** the rotor shaft (4) comprises an additional connector (19) for connecting the rotor shaft (4) to a rotor cup (3), wherein the connector (19) is implemented having a tubular shape and comprises a first connecting region (24a) by means of which said connector is connected to a first outer piece (16a) of the at least two outer pieces (16) and a second connecting region (24b) for connecting to the rotor cup (3).

2. The rotor shaft (4) according to the preceding claim, **characterized in that** the first outer piece (16a) comprises a coupling device (20) for transmitting torque, particularly gear teeth, for connecting the rotor shaft (4) to the rotor cup (3) for transmitting torque.

3. The rotor shaft (4) according to the preceding claim, **characterized in that** the rotor shaft (4) has a second outer piece (16b) of the at least two outer pieces (16) comprising a receptacle (21), particularly a cylindrical recess (22), for a permanent magnet (18) at the end face thereof facing away from the coupling device (20).

4. The rotor shaft (4) according to the preceding claim, **characterized in that** a bushing (13) for receiving the permanent magnet (18) and made of a non-magnetizable material, particularly of an aluminum material, is disposed in the recess (22).

5. The rotor shaft (4) according to any one of the preceding claims, **characterized in that** at least the outer pieces (16) and the center piece (15) are welded to each other, particularly laser welded.

6. The rotor shaft (4) according to any one of the preceding claims, **characterized in that** the first connecting region (24a) and the second connecting region (24b) are sleeve-shaped.

7. The rotor shaft (4) according to any one of the claims 2 through 6, **characterized in that** the coupling device (20) is disposed within the second sleeve-shaped connecting region (24b) at least radially, preferably radially and axially.

8. The rotor shaft (4) according to any one of the preceding claims, **characterized in that** the connector (19) or one of the outer pieces (16) comprises a support surface (11) facing in the axial direction of an emergency running bearing, particularly a bearing race (12).

9. The rotor shaft (4) according to the preceding claim, **characterized in that** the bearing surface (11), particularly the bearing race (12), is made of a metal material, particularly of an aluminum material.

10. The rotor shaft (4) according to any one of the preceding claims, **characterized in that** the at least one center piece (15) of the rotor shaft (4) is made of a non-magnetizable material, particularly of a stainless steel material.

11. The rotor shaft (4) according to any one of the preceding claims, **characterized in that** the at least two outer pieces (16) and/or the connector (19) are made of a magnetizable material, particularly of a highstrength or a rustproof steel material.

12. The rotor shaft (4) according to any one of the preceding claims 3 through 11, **characterized in that** the center piece (15) comprises a first receptacle region (23a) for the first outer piece (16a) and a second receptacle region (23b) for the second outer piece (16b).

13. The rotor shaft (4) according to any one of the preceding claims, **characterized in that** the center piece (15) and the outer pieces (16) have the same outer diameter.

14. A spinning rotor (2) having a rotor cup (3) and a rotor shaft (4) according to any one of the preceding claims.

## Revendications

1. Tige de rotor (4) pour un rotor de filage (2) d'un métier à filer à bout libre (1), lequel rotor de filage est monté sans contact dans un arrangement de palier magnétique (8) et peut être entraîné par un entraînement individuel à électromoteur (5), dans laquelle la tige de rotor (4) présente une structure en plusieurs pièces avec au moins une pièce centrale (15) et au moins deux pièces extérieures (16) entourant la pièce centrale (15), dans laquelle la pièce centrale (15) et les pièces extérieures (16) sont disposées les unes derrière les autres dans la direction axiale de la tige de rotor (4) et dans laquelle la pièce centrale (15) présente une cavité (17) dans lequel est disposé un aimant permanent (18) coopérant avec un stator (10) de l'entraînement individuel à électromoteur (5), **caractérisée en ce que** la tige de rotor (4) présente une pièce de connexion (19) supplémentaire pour relier la tige de rotor (4) à une coupelle rotorique (3), dans laquelle la pièce de connexion (19) se présente sous une forme tubulaire et présente une première zone de connexion (24a) avec laquelle elle est connectée à une première pièce extérieure (16a) des, au moins deux, pièces extérieures (16), et une deuxième zone de connexion (24b) pour la connexion à la coupelle rotorique (3).

2. Tige de rotor (4) selon la revendication précédente, **caractérisée en ce que** la première pièce extérieure (16a) présente un dispositif d'accouplement (20) transmettant le couple, en particulier une denture, pour la liaison transmettant le couple de la tige de rotor (4) avec la coupelle rotorique (3).

3. Tige de rotor (4) selon la revendication précédente, **caractérisée en ce que** la tige de rotor (4) comprend une deuxième pièce extérieure (16b) des, au moins deux, pièces extérieures (16), qui présente à son extrémité détournée du dispositif d'accouplement (20) un logement (21), en particulier un évidement cylindrique (22), pour un aimant permanent (18).

4. Tige de rotor (4) selon la revendication précédente, caractérisée en ce qu'une douille d'insertion (13) en un matériau non magnétisable, en particulier en un matériau d'aluminium, qui reçoit l'aimant permanent (18), est disposée dans l'évidement (22).

5. Tige de rotor (4) selon l'une quelconque des revendications précédentes, **caractérisée en ce qu'**au moins les pièces extérieures (16) et la pièce centrale (15) sont soudées les unes aux autres, en particulier soudées par laser.

6. Tige de rotor (4) selon l'une quelconque des revendications précédentes, **caractérisée en ce que** la première zone de connexion (24a) et la deuxième zone de connexion (24b) sont en forme de manchon.

7. Tige de rotor (4) selon l'une quelconque des revendications 2 à 6, **caractérisée en ce que** le dispositif d'accouplement (20) est disposé au moins radialement, de préférence radialement et axialement, à l'intérieur de la deuxième zone de connexion (24b) en forme de manchon.

8. Tige de rotor (4) selon l'une quelconque des revendications précédentes, **caractérisée en ce que** la pièce de connexion (19) ou l'une des pièces extérieures (16) présente une surface d'appui (11) d'un palier de secours, notamment une bague de palier (12), orientée dans la direction axiale.

9. Tige de rotor (4) selon la revendication précédente, **caractérisée en ce que** la surface d'appui (11), en particulier la bague de palier (12), est réalisée en un matériau métallique, en particulier en un matériau en aluminium.

10. Tige de rotor (4) selon l'une quelconque des revendications précédentes, **caractérisée en ce que** la, au moins une, pièce centrale (15) de la tige de rotor (4) est réalisée en un matériau non magnétisable, en particulier en un matériau en acier inoxydable.

11. Tige de rotor (4) selon l'une quelconque des revendications précédentes, **caractérisée en ce que** les, au moins deux, pièces extérieures (16) et/ou la pièce de connexion (19) sont réalisées en un matériau magnétisable, en particulier en un matériau en acier à haute résistance ou un matériau en acier inoxydable.

12. Tige de rotor (4) selon l'une quelconque des revendications précédentes 3 à 11, **caractérisée en ce que** la pièce centrale (15) présente une première zone de réception (23a) pour la première pièce extérieure (16a) et une deuxième zone de réception (23b) pour la deuxième pièce extérieure (16b).

13. Tige de rotor (4) selon l'une quelconque des revendications précédentes, **caractérisée en ce que** la pièce centrale (15) et les pièces extérieures (16) présentent le même diamètre extérieur.

14. Rotor de filage (2) avec une coupelle rotorique (3) et une tige de rotor (4) selon l'une quelconque des revendications précédentes.
